# EUROPEAN PATENT APPLICATION

(11) **EP 4 570 646 A1**
(43) Date of publication of application: **18.06.2025**
(21) Application number: 23383290.6
(22) Date of filing: 14.12.2023
(51) Int. Cl.: B64C 1/06, B64C 1/12, B64C 1/14, B64D 37/02, B64D 37/30, B64D 11/00

(54) **STRUCTURAL JOINT FOR ATTACHING A REMOVABLE AIRCRAFT PANEL TO A FUSELAGE SECTION**

(71) Applicant: Airbus Operations, S.L.U., 28906 Getafe (Madrid) (ES)
(72) Inventor: MARTIN CALVO, David, E-28906 Getafe, Madrid (ES); SOLA CASADO, Esther, E-28906 Getafe, Madrid (ES); JIMÉNEZ NÚÑEZ, Joaquín Andrés, E-28906 Getafe, Madrid (ES); GÓMEZ VIZCAÍNO, Raúl, E-28906 Getafe, Madrid (ES); COLMERAREJO MATELLANO, Nuria, E-28906 Getafe, Madrid (ES)
(74) Representative: ABG Intellectual Property Law, S.L.

(57) **Abstract**

The present invention belongs to the field of aircraft, and in particular, it relates to fittings and joints intended to be attached to a removable aircraft panel and/or to a fuselage section of an aircraft. More specifically, the invention relates to joints for a removable structural panel of an aircraft, such as a panel or a door that provides accessibility to a fuel tank and associated systems of an aircraft, for improved industrialisation, operability and maintenance.

## Description

### TECHNICAL FIELD OF THE INVENTION

The present invention belongs to the field of aircraft, and in particular, it relates to fittings and joints intended to be attached to a removable aircraft panel and/or to a fuselage section of an aircraft.

More specifically, the invention relates to joints for a removable structural panel of an aircraft, such as a panel or a door that provides accessibility to a fuel tank and associated systems of an aircraft, for improved industrialisation, operability and maintenance.

### BACKGROUND OF THE INVENTION

Due to environmental reasons, challenges to reduce the use of fossil fuels must be increasingly faced. In this scenario, hydrogen produced on the basis of renewable energy is a reasonable candidate for efficient energy supply. Its high energy density makes it an emerging alternative fuel for aircraft applications.

In particular, hydrogen (H2) is an attractive fuel for high-altitude short-medium range aircraft because it contains about 3 times the energy per kilogram as compared with traditional hydrocarbon fuels. Therefore, in aircraft applications, said high specific energy of hydrogen may be a key enabler. However, practical considerations have largely prevented its use. While the specific energy of hydrogen is very high, the energy per volume unit is comparatively low. Liquid hydrogen (LH2) enhances its energy density relative to gaseous form, while allowing to reduce the mass of the tank required to confine the hydrogen within as a result of the lower pressure in liquid state.

In this regard, LH2 cryotanks (i.e., tanks configured for housing liquid hydrogen and for maintaining the necessary conditions for maintaining hydrogen in the liquid state) are one of the key components of the structure of future generations of heavy lift launch vehicles, space exploration structures and H2 fueled aircrafts.

One of the challenges in developing hydrogen storage systems in aircraft industry is the need to accommodate within aircraft fuel storage tanks and associated equipment for fuel conditioning and distribution, while allowing access thereto for maintenance operations. The size of the fuel tank (such as a H2 tank) directly affects the size of the panel, which may be of considerable size. In some cases, fuel tanks need to be completely removed from the interior of the aircraft for inspection and maintenance operations outside the aircraft, so that large removable panels need to be arranged to permit the extraction of the fuel tanks out of the aircraft.

In the case of the large removable aircraft panels, such panels may overlap with the airframe of the aircraft. A technical solution must thus be implemented to ensure the structural integrity and continuity of the aircraft in this portion of the fuselage.

Various panels, maintenance doors, cargo doors and solutions for attaching removable elements to an aircraft fuselage are known. These known means of attachment of a structural element to a fuselage section can be, for example, latches, pin latches or hook sections. However, these known means are specific to each structural element and therefore do not fully meet the strict requirements of a removable panel for accessing an aircraft fuel tank.

There is, therefore, a need in the art for a structural joint for mounting a removable aircraft panel to an aircraft fuselage.

### SUMMARY OF THE INVENTION

The present invention provides a first fitting of a structural joint according to claim 1, a second fitting of a structural joint according to claim 12, a structural joint for releasably assembling a removable aircraft panel to a fuselage section according to claim 17, a removable aircraft panel according to claim 21, a fuselage section according to claim 22 and an aircraft according to claim 23. In dependent claims, preferred embodiments of the invention are defined.

In a first inventive aspect, the invention provides a first fitting of a structural joint, the first fitting being for attachment to a removable aircraft panel or to a fuselage section for an aircraft, the first fitting having a body comprising:
- a first end,
- a second end opposed to the first end,
- a first supporting portion and
- a protruding first contact portion, both the first supporting portion and the first contact portion extending between the first end and the second end,
wherein:
- the first supporting portion is adapted for being attached to the aircraft panel or to the fuselage section;
- the first contact portion is adapted to contact a complementary portion of a second fitting of the structural joint in an assembled position with the second fitting, wherein the first contact portion comprises:
   - a first main contact portion, and
   - two first lateral contact portions, each joined to the first main contact portion, wherein the first lateral contact portions are arranged laterally with respect to the first main contact portion and are inclined with respect to the first main contact portion.

The fact that the first lateral contact portions are inclined with respect to the first main contact portion enables the easy installation and the absorption of dissimilar deformations of the two structures to be joined (panel and fuselage section).

The first supporting portion is adapted to be attached, in an assembled position, to a corresponding part of an aircraft panel or of a fuselage section.

A "fuselage section", as used in this context, shall be understood as a part or portion of a fuselage of an aircraft.

The fuselage of an aircraft is normally divided into three main components: a tapered nose section which houses at least a portion of the cockpit from where the crew controls the operation of the aircraft, a substantially tubular section housing the passenger cabin, and a tapered tail cone. The tail cone is defined between the end of the tubular section of the fuselage destined to house the payload and the aft end of the fuselage, and thus represents a smooth transition from a section with a substantially constant diameter to a tapered section, that is, with at least one sloped surface.

An "aircraft panel", as used in this context, shall be understood as an element configured to form part of a fuselage section, such that by means of the aircraft panel an access to an inner space of the fuselage section is closed.

In an embodiment, the aircraft panel comprises at least one structural element, such as at least one portion of a frame and/or at least one portion of a beam. This is particularly advantageous in the case of an aircraft panel of large size having a structural function. The present invention makes it possible to join the at least one structural element of the aircraft panel to the airframe of the fuselage section, thus providing structural continuity.

In an embodiment, the first supporting portion is configured as a wall, having an outer surface and an opposed inner surface.

In an embodiment, the shape and/or inclination of the outer surface corresponds substantially to the same shape and/or inclination of the part of the element to be attached (i.e. the aircraft panel or the fuselage section).

In an embodiment, the first supporting portion is substantially flat and is adapted to be joined, in an assembled position, to a substantially flat surface of a corresponding part of a removable aircraft panel or a corresponding part of a fuselage section for an aircraft.

In an embodiment, the first supporting portion is rectangular-shaped or square-shaped.

In an embodiment, the first main contact portion of the first contact portion forms an angle with respect to the first supporting portion. In an embodiment, this angle is greater than 0° and less than or equal to 45°, and more preferably comprised in the range of 10° to 30°. This angle enables the easy installation and the absorption of dissimilar deformations of the two structures to be joined by the first fitting and a complementary second fitting.

The first main contact portion of the first contact portion has an outer surface. Likewise, the first lateral contact surfaces of the first contact portion have a respective outer surface. The outer surfaces of the first contact portion and the two first lateral contact surfaces of the first contact portion are adapted to contact a complementary portion of a second fitting of the structural joint in an assembled position with the second fitting. In an embodiment, the first contact portion of the first contact portion is configured as a wall, having an outer surface and an opposed inner surface.

In an embodiment, the first lateral contact surfaces of the first contact portion are configured as a wall having an inner surface and an opposed outer surface. Preferably, the shape and inclination of the outer surfaces of the first main contact portion and the first lateral contact surfaces correspond substantially to the same shape of the complementary portion of a second fitting of the structural joint.

In an embodiment, the first main contact portion and/or the first lateral contact portions are substantially flat. In a particular embodiment, the outer surfaces of the first contact portion and/or the outer surfaces of the first lateral contact surfaces are substantially flat and are adapted to be attached, in an assembled position, with a substantially flat surface of a corresponding part of a second fitting of the structural joint.

In an embodiment, the first lateral contact portions are symmetrically inclined with respect to the first main contact portion.

In an embodiment, the body of the first fitting has a plane of symmetry that comprises the centre line of the first main contact portion.

In an embodiment, the first lateral contact portions are inclined with respect to the first main contact portion by an angle greater than 90° and less than or equal to 150°, preferably comprised in the range of 100° to 150°, and more preferably in the range from 110° to 130°. This particular angle improves the installation and the absorption of dissimilar deformations of the (panel and fuselage section) to be joined. In an embodiment, the first lateral contact portions are configured to allow a loose fit with the corresponding second lateral contact portions of a complementary second fitting to avoid jamming, but tight enough so that small deformations produce contact between both fittings and thus transfer of shear loads.

In those cases where the first lateral contact portions are inclined with respect to the first main contact portion at an angle greater than 90° and less than or equal to 150°, the first contact portion has a substantially trapezoidal prismatic shape. The term "substantially trapezoidal prismatic shape" shall be understood to mean a trapezoidal prismatic shape comprising only three portions, i.e. without a fourth portion which would close the substantially trapezoidal prismatic shape. When additionally the first main contact portion and the two first lateral contact portions form an angle greater than 0° and less than or equal to 45° with respect to the first support portion, the first contact portion has a substantially oblique trapezoidal prismatic shape.

"Shear loads", as used in this context, shall be understood as forces applied to a structural element (wherein, depending on the case, this structural element is the first fitting, the second fitting or the structural joint) that tends to produce a sliding failure on the structural element along a plane that is parallel to the direction of the force.

"Pull loads", as used in this context, shall be understood as two forces applied to a structural element (wherein, depending on the case, this structural element is the first fitting, the second fitting or the structural joint) acting in opposite directions, which tend to stretch the element.

"Bending loads", as used in this context, shall be understood as forces applied perpendicularly to a longitudinal axis of a structural element (wherein, depending on the case, this structural element is the first fitting, the second fitting or the structural joint) that produces bending stresses within the element.

In an embodiment, the first supporting portion is directly connected to each of the first lateral contact portions by two spaced apart parts of the first supporting portion. In a particular embodiment, each of the respective lateral sides of the first lateral contact portion is directly connected to a respective lateral side of the first supporting portion. In an alternative embodiment, the first fitting further comprises two first lateral portions, each of which connects the first supporting portion to a respective first lateral contact portion. The provision of said two first lateral portions makes the first fitting more compact. In a particular embodiment, each of the two first lateral portions connects a respective end of the first supporting portion to a respective end of the corresponding first lateral contact portion. In a particular embodiment, the two first lateral portions are substantially flat and extend in a direction substantially perpendicular to the inner and/or outer surface of the first supporting portion. In a particular embodiment, the respective outer surfaces of each of the two first lateral portions are substantially flat.

In an embodiment, the body of the first fitting further comprises at least one web extending from the first supporting portion to the first contact portion, the at least one web being adapted to transmit axial and bending loads through the first fitting. In an embodiment, the at least one web extends from an inner surface of the first supporting portion to an inner surface of the first contact portion.

In an embodiment, the at least one web is configured as a wall that extends in a direction substantially perpendicular to the first supporting portion, following a preferably straight trajectory and covering substantially the entire region from the first end to the second end.

In an embodiment, the body of the first fitting comprises two webs, each of which extends from a respective spaced apart part of the first supporting portion to a respective intersection of the first main contact portion with each of the two first lateral contact portions of the first contact portion. According to this configuration of the first fitting comprising two webs, the two webs define therebetween an internal space accessible from the first end and/or the second end, wherein said internal space can be used to provide access to a user for mounting a fastening means in the first fitting. Advantageously, in an operating position with the first fitting mounted as part of a panel or a fuselage section for an aircraft, this embodiment allows the first fitting to be operated with external access only, thus the first fitting can be inspected, maintained and/or repaired easily from the outside of the aircraft.

In a particular case of the embodiment wherein the body of the first fitting comprises two webs, the body of the first fitting further comprises at least two transversal stiffeners, each transversal stiffener extending from a corresponding web in a direction substantially perpendicular to the web, wherein the transversal stiffeners are adapted to transmit shear loads through the first fitting. Such transversal stiffeners add rigidity and strength to the first fitting.

In a particular embodiment, each transversal stiffener is configured as a wall, and extends from each web distributed each transversal stiffener at a distance from one another in a direction from the first end to the second end.

In an embodiment, the first main contact portion comprises at least one opening for mounting at least one fastening element, preferably a through opening for mounting at least one tension bolt. In a particular embodiment, the first main contact portion comprises at least two spaced apart openings. The at least one fastening element has the function of keeping the first fitting and the corresponding second fitting in position and attached to each other. The at least one fastening element transmits axial and bending loads between the two fittings of the structural joint.

In a particular embodiment, each of the at least two spaced apart openings are substantially aligned with a corresponding transversal stiffener of the at least two transversal stiffeners.

In an embodiment, the first end and/or the second end of the body of the first fitting is adapted to allow access from the exterior of the first fitting to an interior space of the body of the first fitting. By allowing access from the exterior of the first fitting to an interior space of the body of the first fitting, the introduction of a fastening element is made possible. In a preferred embodiment, an interior space is formed between the respective inner surfaces of the supporting portion, the main contact portion and the two webs. This interior space is accessible from the first end and/or the second end of the body of the first fitting. This interior space allows a user to have access to the first main contact portion for assembly and disassembly of the joint. In one embodiment, the user has access to the at least two spaced apart openings.

In an embodiment, the first fitting comprises sliding means arranged in at least one portion selected from the first main contact portion and the first lateral contact portions of the first fitting. The sliding means facilitate the assembly process of the first fitting with a complementary second fitting of the structural joint and also prevent wear of the contact surfaces of the first fitting with the contact surfaces of the second fitting. In an embodiment, the sliding means are rollers, preferably arranged so that one roller protrudes from each of the first main contact portion and the first lateral contact portions. In an embodiment, the sliding means is a low-friction coating such as Teflon.

In a particular embodiment, the sliding means of the first fitting are arranged in a detachable part of the body so that, in the event of failure, the sliding means can be easily replaced by replacing only the detachable part in which they are arranged. This detachable part can be arranged in one end of the body selected from the first or the second end. In an embodiment, the detachable part is made of Teflon.

In a second inventive aspect, the invention provides a second fitting of a structural joint, the second fitting being for attachment to a removable aircraft panel or to a fuselage section for an aircraft, the second fitting having a body comprising:
- a third end,
- a fourth end opposed to the third end,
- a second supporting portion and
- a recessed second contact portion, both the second supporting portion and the second contact portion extending between the third end and the fourth end,
wherein:
- the second supporting portion is adapted for being attached to the removable aircraft panel or to the fuselage section; and
- the second contact portion is adapted to contact the first contact portion of the first fitting according to any of the described embodiments in an assembled position with the first fitting, wherein the second contact portion comprises:
   - a second main contact portion, and
   - two second lateral contact portions, each joined to the second main contact portion, wherein the second lateral contact portions are arranged laterally with respect to the second main contact portion and are inclined with respect to the second main contact portion,
wherein the second main contact portion and the two second lateral contact portions have a substantially complementary shape and a substantially same inclination as the respective first main contact portion and the first lateral contact portions of the first fitting.

In an embodiment of the second fitting, the second supporting portion has an outer surface adapted to be attached to the aircraft panel or to the fuselage section. In an embodiment, the second supporting portion is configured as a wall having an inner surface and an outer surface. Preferably, the shape and inclination of the outer surface of the second supporting portion corresponds substantially to the same shape of the part of the member to be attached (i.e. to the aircraft panel or to the fuselage section).

In an embodiment, the second supporting portion is substantially flat. In a particular embodiment, the outer surface of the second supporting portion is substantially flat and is adapted to be attached, in an assembled position, to a substantially flat surface of a corresponding part of a removable aircraft panel or a corresponding fuselage section for an aircraft.

In an embodiment, the second supporting portion is rectangular-shaped or square-shaped.

In an embodiment, the second main contact portion of the second fitting forms an angle with respect to the second supporting portion. In an embodiment the angle is greater than 0° and less than or equal to 45°, and more preferably comprised in the range of 10° to 30°. This angle enables the easy installation and the absorption of dissimilar deformations of the two structures to be joined by the second fitting and the first fitting.

The second main contact portion of the second contact portion has an outer surface. Likewise, the second lateral contact surfaces of the second contact portion have a respective outer surface. The outer surfaces of the second contact portion and the second lateral contact surfaces of the second contact portion are adapted to contact the complementary first contact portion of the first fitting according to any of the described embodiments in an assembled position with the first fitting.

In an embodiment, the second main contact portion and/or the second lateral contact portions are substantially flat. In a particular embodiment, the outer surfaces of the second contact portion and/or the second lateral contact portions are substantially flat and are adapted to be attached, in an assembled position, with a substantially flat surface of a corresponding contact portion of the first fitting of the structural joint.

In an embodiment, the second lateral contact portions of the second fitting are symmetrically inclined with respect to the second main contact portion.

In an embodiment, the body of the second fitting has a plane of symmetry that comprises the centre line of the second main contact portion.

In an embodiment, the second lateral contact portions of the second fitting are inclined with respect to the second main contact portion by an angle greater than 90° and less than or equal to 150°, and preferably comprised in the range of 100° to 150°, and more preferably in the range from 110° to 130°. This particular angle improves the installation and the absorption of dissimilar deformations of the (panel and fuselage section) to be joined. In an embodiment, the second lateral contact portions are configured to allow a loose fit with the corresponding first lateral contact portions of a complementary first fitting to avoid jamming, but tight enough so that small deformations produce contact between both fittings and thus transfer of shear loads.

In an embodiment, the second supporting portion is directly connected to each of the second lateral contact portions by two spaced apart parts of the second supporting portion. In a particular embodiment, each of the respective lateral sides of the second lateral contact portions is directly connected to a respective lateral side of the second supporting portion. In an alternative embodiment, the second fitting further comprises two second lateral portions, each of which connects the second supporting portion to a respective second lateral contact portion. The provision of said two second lateral portions makes the second fitting more compact. In a particular embodiment, each of the two second lateral portions connects a respective end of the second supporting portion to a respective end of the corresponding second lateral contact portion. In a particular embodiment, the two second lateral surfaces are substantially flat and extend in a direction substantially perpendicular to the direction of the outer surface of the second supporting portion.

In an embodiment, the body of the second fitting further comprises at least one transversal stiffener extending from the second supporting portion to the second lateral contact portions in a direction substantially perpendicular to the second supporting portion, wherein the at least one transversal stiffener is adapted to transmit shear loads through the second fitting.

In a particular embodiment of the second fitting, the body of the second fitting comprises at least two transversal stiffeners extending from the second supporting portion, each transversal stiffener being configured as a wall, wherein the transversal stiffeners are distributed at a distance from one another in a direction from the third end to the fourth end.

In an embodiment, the second main contact portion of the second fitting comprises at least one opening for mounting at least one fastening element, preferably a through opening for mounting at least one tension bolt. In a particular embodiment, the second main contact portion comprises at least two spaced apart openings.

In a particular embodiment, each of the at least two spaced apart openings is substantially aligned with a corresponding transversal stiffener of the at least two transversal stiffeners.

In an embodiment, the third end and/or the fourth end of the second fitting is adapted to allow access from the exterior to an interior space of the body of the second fitting. By allowing access from the exterior of the first fitting to an interior space of the body of the first fitting, the introduction of a fastening element is made possible. Advantageously, in an operating position with the second fitting mounted as part of a panel or a fuselage section for an aircraft, this embodiment allows the second fitting to be operated with external access only, thus the second fitting can be inspected, maintained and/or repaired easily from the outside of the aircraft.

In an embodiment, the second fitting further comprises sliding means arranged in at least one portion selected from the second main contact portion and the second lateral contact portions of the second fitting. The sliding means facilitate the assembly process of the second fitting with the complementary first fitting of the structural joint and also prevent wear of the contact surfaces of the second fitting with the contact surfaces of the first fitting. In an embodiment, the sliding means are rollers, preferably arranged so that one roller protrudes from each of the second main contact portion and the second lateral contact portions. In an embodiment, the sliding means is a resistant coating such as Teflon.

In a particular embodiment, the sliding means of the second fitting are arranged in a detachable part of the body so that, in the event of failure, the sliding means can be easily replaced by replacing only the detachable part in which they are arranged. This detachable part can be arranged in one end of the body selected from the third or the fourth end. In an embodiment, the detachable part is made of Teflon.

In an embodiment, the first fitting comprises sliding means arranged in at least one portion selected from the first main contact portion and the first lateral contact portions and the second fitting comprises sliding means arranged in at least one portion selected from the second main contact portion and the second lateral contact portions of the second fitting.

In a third inventive aspect, the invention provides a structural joint for releasably assembling a removable aircraft panel to a fuselage section, the structural joint comprising: a first fitting according to any of the embodiments of the first inventive aspect and a second fitting according to any of the embodiments of the second inventive aspect.

The structural joint according to the third inventive aspect of the invention has a dual function: it joins the panel to the fuselage section and it transfers loads, in particular, transfers loads between portions of structures, allowing precise alignment between the panel and the fuselage section during the assembly process.

Fuel tanks located inside the fuselage section of an aircraft require access thereto for inspection and maintenance operations. According to the present invention, access to the fuel tank (such as a H2 tank) is allowed by removably mounting at least one removable panel to the aircraft fuselage section where the fuel tank is arranged. Advantageously, the structural joint of the present invention can be efficiently used with removable panels of any size, including the removable panel for a fuel tank which can be of considerable size. In some cases, a large removable aircraft panel allows the fuel tank to be completely removed from the interior of the aircraft for inspection and maintenance operations outside the aircraft.

Also, the configuration of the structural joint of the present invention allows it to be used for multiple cycles of the assembly/disassembly process of the removable panel to the fuselage section, thus allowing easy removal and subsequent installation of the panel in order to provide access to the fuel tank with the required frequency.

The fuselage of an aircraft has an inherent stiffness due to its closed cylindrical shape. If a large portion of this cylindrical shape is removed during maintenance (e.g., a large aircraft panel is removed), a reduction of stiffness may happen and consequently, due to the fuselage own weight, the initial shape of the panel gap may be slightly distorted. The structural joint according to the present invention allows an accurate repositioning of the fuselage to the pre-disassembled configuration even with a slightly deformed fuselage in any direction.

The structural joint of the present invention is light and simple and allows to transfer pull, shear and bending frame and skin loads.

The configuration of the structural joint also allows it to be used in combination with other complementary solutions, for example in combination with a hinge located at a point on the removable panel that is distant from the point where the first fitting or the second fitting is located.

In an embodiment, the structural joint further comprises fastening means adapted to attach, in the assembled position, the first main contact portion of the first fitting to the second main contact portion of the second fitting.

In an embodiment, said fastening means comprises at least one fastening element, preferably at least one tension bolt, and the first main contact portion of the first fitting and the second main contact portion of the second fitting comprise a respective corresponding opening for the passage of the at least one fastening element.

In an embodiment, the first contact portion of the first fitting and the second contact portion of the second fitting of the structural joint which are adapted to be contacted in an assembled position of the structural joint form an omega cross-sectional shape in an assembled position. The omega shape of the structural joint advantageously forces the correct alignment between the first fitting and the second fitting during the assembly process of the structural joint, for example when the panel has been removed and needs to be repositioned in the correct aperture provided in the fuselage section.

In an embodiment, the body of the first fitting and/or the body of the second fitting comprises an interior space accessible from the exterior of the structural joint to reach the at least one fastening element, preferably a tension bolt. This allows the structural joint to be operated with external access from the outside of the aircraft.

In a particular embodiment, the structural joint comprises a cover adapted to close and also provide access to an interior space formed inside the body of the first fitting and/or the body of the second fitting. The cover protects the structural joint from water and debris, and also ensures aerodynamic continuity. The cover may be of substantially the same shape and size as a part of the first or second end of the first fitting, or of the same shape and size as a part of the third or fourth end of the second fitting. Such a cover may be completely removable or openable, for example by means of a hinge. If it is completely removable, it may be secured, for example to the first, second, third or fourth end, by any known means adapted to enable the cover to be removed and reattached as required.

In an embodiment, the first lateral contact portions of the first fitting and the second lateral contact portions of the second fitting are configured to allow a loose fit therebetween to avoid jamming, but are tight enough so that small deformations produce contact between both fittings and thus transfer of shear loads.

Any of the fittings (first and second fittings) can be attached to the removable panel.

In a fourth inventive aspect, the invention provides a removable aircraft panel comprising at least one fitting selected from the first fitting according to any of the embodiments of the first inventive aspect or the second fitting according to any of the embodiments of the second inventive aspect, wherein the at least one fitting is fixedly attached to a panel part. The at least one fitting may be attached to a part of the removable aircraft panel by any known attachment, such us rivets or bolts.

In an embodiment, the removable aircraft panel comprises at least one fitting according to any of the embodiments of the first inventive aspect, which is fixedly attached to a panel part. In this embodiment, a corresponding fuselage section for an aircraft comprises at least one complementary fitting according to any of the embodiments of the second inventive aspect, which is fixedly attached to a fuselage part. The first and the second fittings form the structural joint.

In an embodiment, the removable aircraft panel comprises at least one fitting according to any of the embodiments of the second inventive aspect, which is fixedly attached to a panel part. In this embodiment, the fuselage section for an aircraft comprises at least one complementary fitting according to any of the embodiments of the first inventive aspect fixedly attached to a fuselage part.

In an embodiment, the removable aircraft panel comprises a panel skin and at least one structural element, such as at least one portion of a frame and/or at least one portion of a beam. In an embodiment, the removable aircraft panel comprises a plurality of structural elements. In an embodiment, when the aircraft panel is attached to the fuselage section by means of the first and second fittings, the at least one structural element of the aircraft panel has structural continuity with the airframe of the fuselage section via the first and second fittings.

In an embodiment, the panel part to which the fitting is attached is a structural element of the panel, such as a portion of a panel frame and/or a portion of a panel beam.

In an embodiment, the panel skin of the removable aircraft panel has a portion configured with the same shape contour as a part of the first end or the second end of the body of the first fitting and/or as a part of the third end or the fourth end of the body of the second fitting.

In an embodiment, the fuselage section comprises a fuselage skin and at least one structural element, such as a frame or a beam. In an embodiment, the fuselage section comprises a plurality of structural elements. In an embodiment, the at least one structural element of the fuselage section is part of the airframe of the fuselage section.

In an embodiment, the fuselage part to which the fitting is attached is a structural element of the fuselage section, such as a fuselage frame and/or a fuselage beam.

In a particular embodiment, the removable aircraft panel further comprises a cover adapted to close and also provide access to an interior space formed inside the body of the first a fitting and/or of the second fitting. The cover allows to maintain aerodynamic continuity with the panel skin and protects the structural joint from water and debris. The cover may be configured as a substantially flat portion, for example having the same shape and size as the first or second end of the first fitting. In an embodiment, the cover is configured with a shape that is complementary to the free space formed between the panel skin and the fuselage skin, such that there is continuity in the entire outer surface formed by the panel skin, the fuselage skin and the cover. Such a cover may be removable or openable.

In a fifth inventive aspect, the invention provides a fuselage section for an aircraft, the fuselage section comprising at least one fitting selected from the first fitting according to any of the embodiments of the first inventive aspect or the second fitting according to any of the embodiments of the second inventive aspect, wherein the at least one fitting is fixedly attached to a part of the fuselage section.

Thus, as in the case of the removable aircraft panel, in an embodiment, a fuselage section for an aircraft comprises at least one fitting according to any of the embodiments of the first inventive aspect, which is fixedly attached to a fuselage part. In this embodiment, a corresponding removable aircraft panel comprises at least one complementary fitting according to any of the embodiments of the second inventive aspect, which is fixedly attached to a panel part. The first and the second fittings form the structural joint.

In an embodiment, the fuselage section comprises at least one fitting according to any of the embodiments of the second inventive aspect, which is fixedly attached to a fuselage part. In this embodiment, a corresponding removable aircraft panel comprises at least one complementary fitting according to any of the embodiments of the first inventive aspect, which is fixedly attached to a panel.

In an embodiment, the fuselage section comprises a fuselage skin and at least one structural element, such as a frame or a beam. In an embodiment, the fuselage section comprises a plurality of structural elements. In an embodiment, the at least one structural element of the fuselage section is part of the airframe of the fuselage section.

In an embodiment, the fuselage part to which the fitting is attached is a structural element of the fuselage section, such as a fuselage frame or a fuselage beam.

In an embodiment of the fuselage section for an aircraft, the fuselage skin has a portion configured with the same shape contour as a part of the first end or the second end of the body of the first fitting and/or of a part of the third end or the fourth end of the body of the second fitting.

In an embodiment, the removable aircraft panel comprises a panel skin and at least one structural element, such as a frame or a beam. In an embodiment, the removable aircraft panel comprises a plurality of structural elements.

In an embodiment, the panel part to which the fitting is attached is a structural element of the panel, such as a panel frame or a panel beam.

In a particular embodiment, the fuselage section for an aircraft further comprises a cover adapted to close and also provide access to an interior space formed inside of the body of the first and/or of the second fitting of the structural joint. The cover allows to maintain aerodynamic flushness with the fuselage skin and protects the structural joint from water and debris. The cover may be configured as a substantially flat portion, for example having the same shape and size as the first or second end of the first fitting. In an embodiment, the cover is configured with a shape that is complementary to the free space formed between the panel skin and the fuselage skin, such that there is continuity in the entire outer surface formed by the panel skin, the fuselage skin and the cover. Such a cover may be removable or openable.

In a sixth inventive aspect, the invention provides an aircraft comprising a removable aircraft panel according to any of the embodiments of the fourth inventive aspect and/or a fuselage section according to any of the embodiments of the fifth inventive aspect.

In a particular embodiment, the aircraft further comprises a cover adapted to close and also provide access to an interior space formed in the interior of the body of the first and/or the second fitting of the structural joint. Such a cover may be configured as a substantially flat portion, for example having the same shape and size as the first or second end of the first fitting. In an embodiment, the cover is configured with a shape that is complementary to the free space formed between the panel skin and the fuselage skin, such that there is continuity in the entire outer surface formed by the panel skin, the fuselage skin and the cover. Such a cover may be removable or openable. Also, the cover protects the structural joint from water and debris.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from preferred embodiments of the invention, given just as examples and not being limited thereto, with reference to the drawings.
- Figure 1: This figure shows a perspective view of a first fitting according to an embodiment of the present invention.
- Figure 2: This figure shows a lateral view of the first fitting shown in Figure 1.
- Figure 3: This figure shows a plan view of the first fitting shown in Figure 1.
- Figure 4: This figure shows a front view of the first fitting shown in Figure 1.
- Figure 5: This figure shows a perspective view of a second fitting according to an embodiment of the present invention.
- Figure 6: This figure shows a lateral view of the second fitting shown in Figure 5.
- Figure 7: This figure shows a plan view of the second fitting shown in Figure 5.
- Figure 8: This figure shows a perspective view of the structural joint for releasably assembling a removable aircraft panel to a fuselage section according to an embodiment of the present invention, the structural joint comprising a first fitting according to the embodiment shown in Figures 1 to 4 and a second fitting according to the embodiment shown in Figures 5 to 7.
- Figure 9: This figure shows a perspective view of another embodiment of a structural joint according to the third inventive aspect of the invention, wherein one fitting of the structural joint is attached to a removable aircraft panel and the other fitting of the structural joint is attached to a fuselage section.
- Figure 10: This figure shows a schematic cross-sectional view of an aircraft having a panel removably mounted in a section of its fuselage by means of two structural joints according to an embodiment of the third aspect of the invention.
- Figure 11: This figure shows a perspective view of the structural joint for releasably assembling a removable aircraft panel to a fuselage section according to the embodiment seen in Figure 8, and also including a skin and frames of a fuselage section or of a panel.
- Figure 12: This figure shows a perspective view of the structural joint for releasably assembling a removable aircraft panel to a fuselage section according to the embodiment seen in Figure 8, also including a skin and frames of a fuselage section and of a panel, and also including a cover.
- Figure 13: This figure shows a different perspective view of the assembly shown in Figure 12.
- Figure 14: This figure shows different schematic views in cross-section and in longitudinal section of different steps of the assembly process of one embodiment of the structural joint according to the third inventive aspect of the invention.
- Figure 15: This figure shows a schematic view of an aircraft according to an embodiment of the present invention.

### DETAILED DESCRIPTION OF THE INVENTION

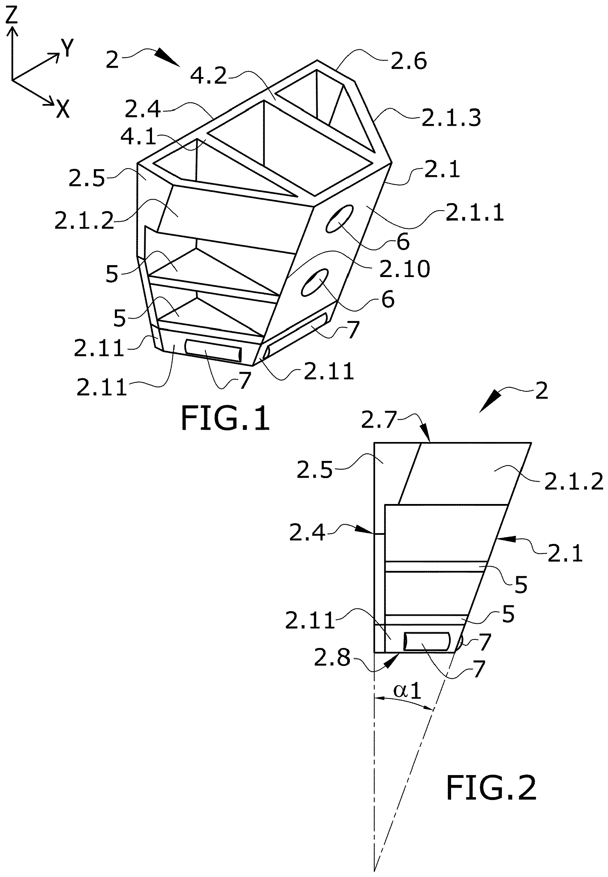

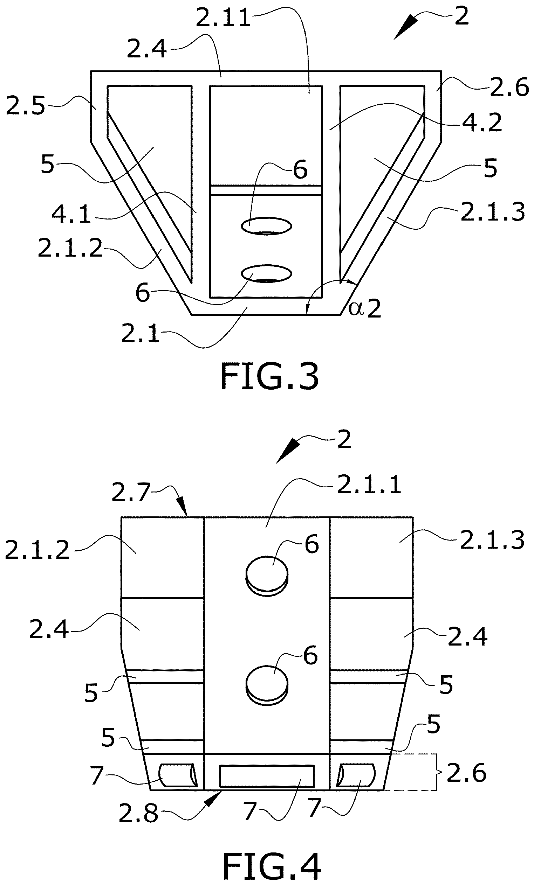

According to a first inventive aspect of the invention, a first fitting (2) is provided. Figures 1 to 4 show complementary views of the first fitting (2) of a structural joint according to an embodiment of the present invention. In particular, Figure 1 shows a front perspective view of said embodiment of the first fitting (2), while Figure 2 shows a lateral view, Figure 3 shows a plan view and Figure 4 shows a front view.

As mentioned, the first fitting (2) of a structural joint is adapted for being attached to a removable aircraft panel (10) or to a fuselage section (20) for an aircraft (100). As it is shown in Figures 1 to 4, the first fitting (2) has a body comprising a first end (2.7) and a second end (2.8) opposed to the first end (2.7). The body of the first fitting (2) further comprises a first supporting portion (2.4) and a protruding first contact portion (2.1), wherein the first supporting portion (2.4) and the first contact portion (2.1) extend between the first end (2.7) and the second end (2.8).

In particular, the first supporting portion (2.4) is the portion adapted to be attached to the removable aircraft panel (10) or to the fuselage section (20), and the first contact portion (2.1) is the portion adapted to contact a complementary portion of a second fitting (3) of the structural joint (1) in an assembled position with the second fitting (3).The first contact portion (2.1) comprises: a first main contact portion (2.1.1), and two first lateral contact portions (2.1.2, 2.1.3), each joined to the first main contact portion (2.1.1), wherein the first lateral contact portions (2.1.2, 2.1.3) are arranged laterally with respect to the first main contact portion (2.1.1) and are inclined with respect to the first main contact portion (2.1.1).

The first supporting portion (2.4) has an outer surface corresponding to the outwardly facing surface which, in an assembled position, is adapted to be joined, to a substantially flat surface of a corresponding part of a removable aircraft panel or a corresponding part of a fuselage section for an aircraft by any known attachment means. In the embodiment shown in Figures 1 to 4, the first support portion (2.4) is configured as a wall (see Figure 1) having an outer surface and an inner surface opposite the outer surface. In the embodiment shown in Figures 1 to 4, the first supporting portion (2.4) is substantially flat, such that the first supporting portion (2.4) is comprised in a plane "Y-Z" (see the X, Y, Z coordinate axis shown in Figure 1).

In an embodiment, shown in Figures 1 to 4, the first and second ends (2.7, 2.8) are arranged such that they are comprised in parallel planes "X-Y".

In an embodiment, the first main contact portion (2.1.1) of the first contact portion (2.1) forms an angle with respect to the first supporting portion (2.4) comprised in the range of 0° to 45°, and preferably comprised in the range of 10° to 30°. This angle, referred to as α1, is indicated in Figure 2.

In the embodiment shown in Figures 1 to 4, the first main contact portion (2.1.1) and the two first lateral contact portions (2.1.2, 2.1.3) of the first contact portion are all configured as a wall having each of the portions (2.1.1, 2.1.2) an outer surface and an inner surface opposite the outer surface. In this embodiment, the first main contact portion (2.1.1) and/or the first lateral contact portions (2.1.2) are substantially flat. In this embodiment, the first main contact portion (2.1.1) extends continuously from the first end (2.7) to the second end (2.8), but the two first lateral contact portions (2.1.2, 2.1.3) extend discontinuously from the first end (2.7) to the second end (2.8). In other embodiments, the two first lateral contact portions (2.1.2, 2.1.3) extend continuously from the first end (2.7) to the second end (2.8) or extend from the first end (2.7) for a certain length without reaching the second end (2.8).

In the embodiment shown in Figures 1 to 4, the body of the first fitting (2) has a plane of symmetry that comprises the centre line of the first main contact portion (2.1.1).

In an embodiment, the first lateral contact portions (2.1.2, 2.1.3) are inclined with respect to the first main contact portion (2.1.1) by an angle greater than 90° and less than or equal to 150°, preferably comprised in the range of 100° to 150°, and more preferably in the range from 110° to 130°. In this illustrated embodiment, this angle, referred to as α2, is indicated in Figure 3. Although this angle α2 is shown only between one lateral contact portion (2.1.3) and the first main contact portion (2.1.1), the same angle α2 is formed between the other lateral contact portion (2.1.2) and the first main contact portion (2.1.1), since in this illustrated embodiment the first lateral contact portions (2.1.2, 2.1.3) are symmetrically inclined with respect to the first main contact portion (2.1.1).

In the embodiment shown in Figures 1 to 4, the first fitting (2) further comprises two first lateral portions (2.5, 2.6), each of which connects a respective part of the first supporting portion (2.4) to a respective first lateral contact portion (2.1.2, 2.1.3). In a particular embodiment, each first lateral portion (2.1.2, 2.1.3) connects a respective lateral end of the first supporting portion (2.4) to a respective lateral end of the corresponding first lateral contact portion (2.1.2, 2.1.3), see Figure 3. In the embodiment shown in Figures 1 to 4, the two first lateral portions (2.5, 2.6) are substantially flat and extend in a direction substantially perpendicular to the direction of the inner or outer surface of the first supporting portion (2.4).

The body of the first fitting (2) further comprises at least one web (4.1, 4.2) extending from the first supporting portion (2.4) to the first contact portion (2.1), the at least one web (4.1, 4.2) being adapted to transmit axial and bending loads through the first fitting (2). The at least one web extends from an inner surface of the first supporting portion to an inner surface of the first contact portion. The embodiment shown in Figures 1 to 4 comprises two spaced and parallel webs (4.1, 4.2) each extending from a respective spaced apart part of the first supporting portion (2.4) to a respective intersection of the first main contact portion (2.1.1) with each of the two first lateral contact portions (2.1.2, 2.1.3) of the first contact portion. The two webs (4.1, 4.2) advantageously define therebetween an internal space accessible from at least one of the first end (2.7) and the second end (2.8), wherein said internal space can be used to provide access to a user for mounting a fastening means in the first fitting (2).

In this embodiment, the at least one web (4.1, 4.2) is configured as a wall extending in a direction substantially perpendicular to the first supporting portion (2.4), following a preferably straight trajectory along the "X" direction (see the X, Y, Z coordinate axis of Figure 1), and covering substantially the entire region from the first end (2.7) to the second end (2.8). In this embodiment, the thickness of the at least one web (4.1, 4.2) is substantially equal to the thickness of the first supporting portion (2.4) and/or of the main and lateral first contact portions (2.1.1, 2.1.2, 2.1.3).

In an embodiment, the body of the first fitting (2) further comprises at least two transversal stiffeners (5), each transversal stiffener (5) extending from a corresponding web (4.1, 4.2) in a direction substantially perpendicular to the web (4.1, 4.2), wherein the transversal stiffeners (5) are adapted to transmit shear loads through the first fitting (2). In this particular illustrated embodiment, the body of the first fitting (2) comprises two spaced transversal stiffeners (5) in each lateral, wherein the transversal stiffeners (5) are configured as a wall and each pair of transversal stiffeners (5) extends from a respective web (4.1, 4.2) distributed each transversal stiffener (5) at a distance from one another in a direction from the first end (2.8) to the second end (2.8). In Figure 1 only a pair of spaced transversal stiffeners (5) can be seen, but in the opposite side of the first fitting (2) another pair of spaced transversal stiffeners (5) are provided.

In an embodiment, the first main contact portion (2.2.1) comprises at least one opening (6) for mounting at least one fastening element, preferably a through opening for mounting at least one tension bolt (not shown in Figures 1 to 4). In a particular embodiment, the first main contact portion (2.1.1) comprises at least two spaced apart openings (6). In the embodiment shown in Figures 1 to 4, two spaced apart through openings (6) are provided.

In an embodiment, the first fitting (2) further comprises sliding means (7) arranged in at least one portion selected from the first main contact portion (2.1.1) and the first lateral contact portions (2.1.2, 2.1.3) of the first fitting (2). In an embodiment, the sliding means are rollers projecting from at least one portion (2.1.1, 2.1.2, 2.1.3) or a resistant coating such as Teflon. In the embodiment shown in Figures 1 to 4, a respective roller is arranged in each of the first main contact portion (2.1.1) and the first lateral contact portions (2.1.2, 2.1.3) of the first fitting (2), see Figure 4. In addition, the respective rollers are arranged in a detachable part (2.11) at the second end (2.8) of the body. Figure 2 shows how the roller provided in the first main contact portion (2.1.1) protrudes outwards from the first main contact portion (2.1.1).

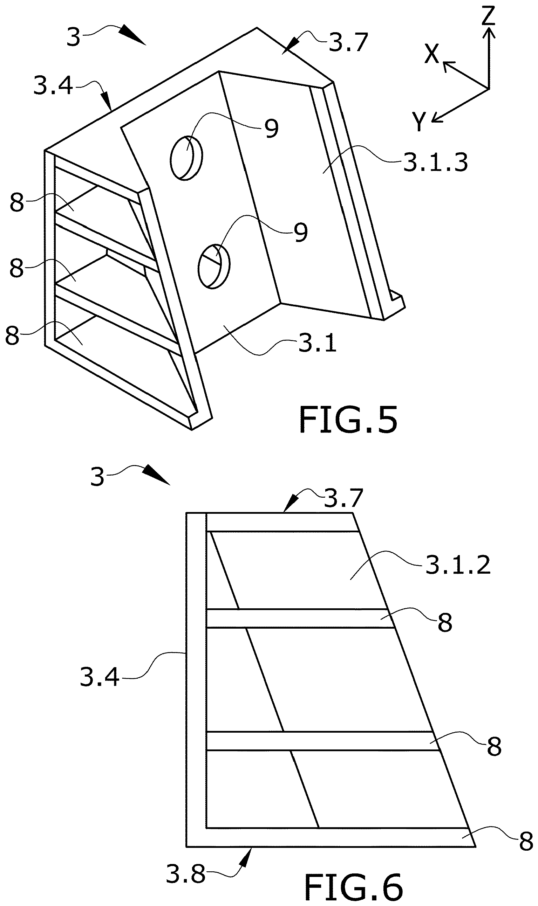

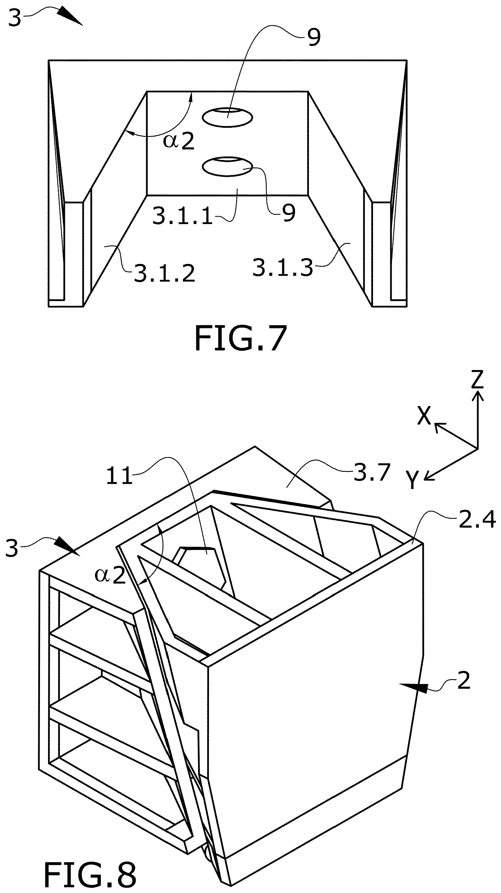

According to a second inventive aspect of the invention, a second fitting (3) is provided. Figures 5 to 7 show complementary views of an embodiment of the second fitting (3) of a structural joint. In particular, Figure 5 shows a front perspective view of said embodiment of the second fitting (3), while Figure 6 shows a lateral view and Figure 7 shows a plan view.

The second fitting (3) of a structural joint is adapted for being attached to a removable aircraft panel (10) or to a fuselage section (20) of an aircraft (100). As it is shown in Figures 5 to 7, the second fitting (3) has a body comprising a third end (3.7), a fourth end (3.8) opposed to the third end (3.7), a second supporting portion (3.4) and a recessed second contact portion (3.1), wherein both the second supporting portion (3.4) and the recessed second contact portion (3.1) extend between the third end (3.7) and the fourth end (3.8).

In particular, the second supporting portion (3.4) is the portion adapted to be attached to the removable aircraft panel (10) or to the fuselage section (20) and the second contact portion (3.1) is the portion adapted to contact the first fitting (2) according to any described embodiments of the structural joint (1) in an assembled position with the first fitting (2). The second contact portion (3.1) comprises a second main contact portion (3.1.1) and two second lateral contact portions (3.1.2, 3.1.3), each joined to the to the second main contact portion (3.1.1), wherein the second lateral contact portions (3.1.2, 3.1.3) are arranged laterally with respect to the second main contact portion (3.1.1) and are inclined with respect to the second main contact portion (3.1.1). The outer surfaces of the second main contact portion (3.1.1) and the two second lateral contact portions (3.1.2, 3.1.3) have a substantially complementary shape and substantially the same inclination as the respective first main contact portion (2.1.1) and the first lateral contact portions (2.1.2, 2.1.3) of the first fitting (2). Such complementary shape and inclination between the outer surfaces of the contact portions (2.1, 3.1) of the first and second fittings (2, 3) ensures an optimum structural connection.

In an embodiment, shown in Figures 5 to 7, the second supporting portion (3.4) is configured as a wall having an inner surface and an outer surface, the outer surface of the second supporting portion (3.4) is adapted to be attached to the aircraft panel (10) or to the fuselage section (20). In the particular embodiment shown in Figures 5 to 7, the second supporting portion (3.4) is substantially flat (see Figure 6), such that the second supporting portion (3.4) is comprised in a plane "Y-Z" (see the X, Y, Z coordinate axis is shown in Figure 5).

In an embodiment, shown in Figures 5 to 7, the third and fourth ends (3.7, 3.8) are arranged such that they are comprised in parallel planes "X-Y".

In an embodiment, the second main contact portion (3.1.1) of the second fitting (3) forms an angle with respect to the second supporting portion (3.4) comprised in the range of 0° to 45°, and preferably comprised in the range of 10° to 30°. This angle, referred to as α1, is indicated in Figure 2.

As can be seen from Figures 5 and 7, in an embodiment, the outer surfaces of the second main contact portion (3.1.1) and/or the second lateral contact portions (3.1.2, 3.1.3) of the second fitting (3) are substantially flat.

As can be seen from Figure 7, in an embodiment, the second lateral contact portions (3.1.2, 3.1.3) of the second fitting (3) are inclined symmetrically with respect to the second main contact portion (3.1.1). Furthermore, the body of the second fitting (3) has a plane of symmetry that comprises the centre line of the second main contact portion (3.1.1).

In an embodiment, the second lateral contact portions (3.1.2, 3.1.3) of the second fitting (3) are inclined symmetrically with respect to the second main contact portion (3.1.1) an angle greater than 90° and less than or equal to 150°, preferably comprised in the range of 100° to 150°, and more preferably in the range from 110° to 130°. This angle, referred to as α2, is indicated in Figure 7.

In an embodiment (not shown), the second fitting (3) further comprises two second lateral portions, each of which connects the second supporting portion to a respective second lateral contact portion. In an embodiment, each of the two second lateral portions connects a respective end of the second supporting portion to a respective end of the corresponding second lateral contact portion. In an embodiment, the two second lateral surfaces are substantially flat and extend in a direction substantially perpendicular to the direction of the outer surface of the second supporting portion.

In an embodiment, the body of the second fitting (3) further comprises at least two transversal stiffeners (8), each transversal stiffener (8) extending from the second supporting portion (3.4) to the second lateral contact portions (3.1.2, 3.1.3) in a direction substantially perpendicular to the second supporting portion (3.4), wherein the at least one transversal stiffener (8) is adapted to transmit shear loads through the second fitting (3). In the particular embodiment illustrated in Figures 5 to 7, the body of the second fitting (3) comprises three spaced transversal stiffeners (8) in each lateral, wherein the three transversal stiffeners (8) are configured as a wall, and wherein the three transversal stiffeners (8) are distributed at a distance from one another in a direction from the third end (3.7) to the fourth end (3.8). In Figure 5 only three spaced transversal stiffeners (8) can be seen, but in the opposite side of the second fitting (3) another three spaced transversal stiffeners (8) are provided.

In an embodiment, the second main contact portion (3.2.1) of the second fitting (3) comprises at least one opening (9) for mounting at least one fastening element, preferably a through opening for mounting at least one tension bolt (not shown in Figures 5 to 7). In a particular embodiment, the second main contact portion (3.2.1) comprises at least two spaced apart openings. In the embodiment shown in Figures 5 to 7, two spaced apart through openings (9) are provided. In the embodiment shown in Figures 5 to 7, each of the two spaced apart openings (9) is substantially aligned with a corresponding transversal stiffener (8).

In an embodiment (not shown), as in the case of the first fitting (2), the second fitting (3) further comprises sliding means arranged in at least one portion selected from the second main contact portion (3.1.1) and the second lateral contact portions (3.1.2, 3.1.3) of the second fitting (3). In an embodiment, the sliding means are rollers projecting from at least one contact portion (3.1.1, 3.1.2, 3.1.3) or a resistant coating such as Teflon. In the embodiment shown in Figures 5 to 7, no sliding means are provided.

According to a third inventive aspect of the invention, a structural joint (1) is provided for releasably assembling a removable aircraft panel (10) to a fuselage section (20), the structural joint (1) comprising a first fitting (2) according to any of the disclosed embodiments, and a second fitting (3) according to any of the disclosed embodiments. Figure 8 shows a perspective view of the structural joint (1) for releasably assembling a removable aircraft panel to a fuselage section, the structural joint (1) being in an assembled position and comprising a first fitting (2) according to the embodiment shown in Figures 1 to 4, a second fitting (3) according to the embodiment shown in Figures 5 to 7 and fastening means (11) for attaching the first and second fittings (2, 3).

In particular, the fastening means (11) are adapted to attach, in the assembled position, the first main contact portion (2.1.1) of the first fitting (2) to the second main contact portion (3.1.1) of the second fitting (3). In an embodiment, the fastening means (11) comprise at least one fastening element, preferably at least one tension bolt, and the first main contact portion (2.1.1) of the first fitting (2) and the second main contact portion (3.1.1) of the second fitting (3) comprise a respective corresponding opening (6, 9) for the passage of the at least one fastening element (11). In the embodiment shown in Figures 1 to 8, two respective through holes (6, 9) are provided in each of the fittings (2, 3). In the embodiment shown in Figures 1 to 8, the shape and inclination of the outer surfaces of the first main contact portion and the first lateral contact surfaces of the first fitting (2) correspond substantially to the same shape and the same inclination of the outer surfaces of the corresponding contact portion (3.1) of the second fitting (3) which are contacted in an assembled position (i.e. to the complementary portion of a second fitting of the structural joint). In the assembled position shown in Figure 8, the two webs (4.1, 4.2) extend from an inner surface of the first supporting portion (2.4) to an inner surface of the first contact portion (2.1) of the first fitting (2) following the "X" direction shown in the X, Y, Z coordinate axis of Figure 8. Also, both the first fitting (2) and the second fitting (3) have respective inner and/or the outer surface of the first and/or second supporting portion (2.4, 3.4) substantially flat, so that the inner and/or the outer surface of the first and/or second supporting portion (2.4, 3.4) is/are comprised in the plane "Y-Z".

In the embodiment shown in Figure 8, the body of the first fitting (2) is adapted so as to comprise an interior space accessible from the exterior of the structural joint (1) in order to reach the at least one fastening element, preferably at least one tension bolt. In this case, this interior space is formed between the two webs (4.1, 4.2) of the first fitting (2). In an embodiment, the structural joint (1) further comprises a cover (13) which is adapted to close and also allow access to said interior space. Such a cover (13) is not depicted in Figure 8.

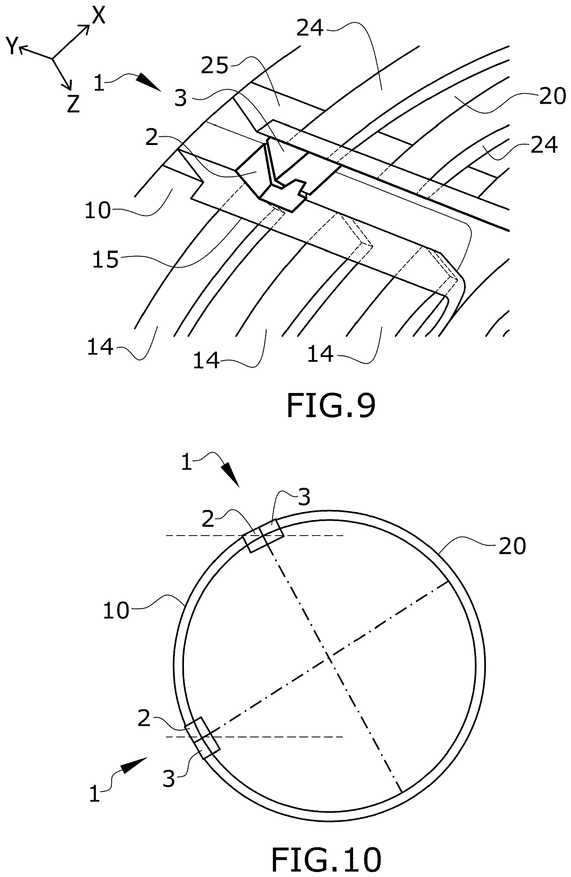

The first fitting (2) and the second fitting (3) may be attached to an aircraft panel or to a fuselage section at different locations, which implies different possible orientations of the first fitting (2) and the second fitting (3) with respect to the fuselage of the aircraft. A preferred orientation of the first fitting (2) and the second fitting (3) relative to the fuselage is shown in Figure 9. Figure 9 shows a perspective view of an embodiment of a structural joint (1) according to the third inventive aspect of the invention in the preferred orientation with respect to the fuselage, wherein one fitting of the structural joint (1) is attached to a removable aircraft panel (10) and the other fitting of the structural joint is attached to a fuselage section (20). In particular, in this embodiment the first fitting (2) is attached to a part of a removable aircraft panel (10), while the second fitting (3) is attached to a part of a fuselage section (20). The structural joint (1) shown in Figure 9 is mounted such that the "X" direction of the structural joint (1) (see the X, Y, Z coordinate axis shown in Figure 8) corresponds to the direction of the frames (24) of the fuselage section (20), also referred to herein as the axial direction; the "Y" direction of the structural joint (1) corresponds to the direction in which the beams (25) of the fuselage section (20) or the beam (15) of the removable aircraft panel (10) extend, also referred herein as the transversal direction; and the "Z" direction of the structural joint (1) corresponds to the direction substantially towards the centre of the cross-section of the fuselage, also referred to herein as the radial direction.

In this preferred orientation with respect to the fuselage, shown in Figure 9, the inclination (preferably an angle α2 greater than 90° and less than or equal to 150°) of the first lateral contact portions (2.1.2, 2.1.3) with respect to the first main contact portion (2.1.1) and the inclination of the second lateral contact portions (3.1.2, 3.1.3) with respect to the second main contact portion (3.1.1) enable the easy installation and the absorption of dissimilar transversal deformations of the two structures (10, 20) to be joined (aircraft panel (10) and fuselage section (20)). The magnitude of this angle α2 can vary according to the specific conditions: lower values of angle α2 favour the transversal load transfer (shear) and smoother assembly forces, while greater values of angle α2 improve the absorption of higher initial mismatches between the respective contact surfaces of the first fitting (2) and those of a complementary second fitting (3) and allow more compact fittings (1, 2) in the transversal direction.

In this preferred orientation with respect to the fuselage, shown in Figure 9, both the inclination (preferably an angle α1 greater than 0° and less than or equal to 45°) of the first main contact portion (2.1.1) of the first contact portion with respect to the first supporting portion (2.4) and the inclination of the second main contact portion (3.1.1) of the second contact portion with respect to the second supporting portion (3.4) enable the easy installation and the absorption of dissimilar axial deformations of the two structures (10, 20) to be joined (aircraft panel (10) and fuselage section (20)) by the first fitting (2) and a complementary second fitting (3). In an embodiment, under favourable installation conditions (i.e. fuselage openings along the sides parallel to the longitudinal axis of the fuselage), this angle α1 may be even close to 0°, for example from more than 0° to 5°. The magnitude of this angle α1 can vary according to the specific conditions: lower values of angle α1 favour axial load transfer and smoother assembly forces, while greater values of angle α1 improve the absorption of higher initial mismatches between the respective contact surfaces of the first fitting (2) and the complementary second fitting (3) and allow more compact fittings (2, 3) in the radial direction. In other embodiments, there is no inclination of the first main contact portion (2.1.1) of the first contact portion with respect to the first supporting portion (2.4).

In this embodiment shown in Figure 9, the first supporting portion (2.4) of the first fitting (2) is attached to a beam (15) of the removable aircraft panel (10) and is arranged at an end of a frame (14) of the removable aircraft panel (10), aligned with the frame as a continuation thereof. Similarly, the second supporting portion (3.4) of the second fitting (3) is attached to a beam (25) of the fuselage section (20) and is arranged at an end of a frame (24) of the fuselage section (20), aligned with the frame as a continuation thereof.

Figure 10 shows a schematic cross-sectional view of an aircraft fuselage, which is schematically represented by a circumference, having a panel (10) removably mounted in a fuselage section (20) by means of two spaced structural joints (1), both in accordance with the third aspect of the invention. In particular, each structural joint (1) is mounted in an end of the panel (10) selected from an upper end and a lower end of the panel (10). In other examples, more than two structural joints (1) may be mounted in each panel (10). In other examples, only one structural joint (1) is mounted in each panel (10). The structural joint (1) is extremely versatile as it allows the removable panel (10) to be correctly positioned on the deformed fuselage in any direction and also allows the fuselage to be accurately repositioned to the pre-disassembled configuration. In the event that the fuselage is slightly deformed, the structural joint (1) is advantageously adapted so that it can be mounted in said deformed fuselage (20). The two illustrated dashed lines represent the assembly direction of the panel (10) with one fitting (2, 3) to a fuselage section (20) comprising the other fitting (3, 2) of the structural joint (1). Similarly to Figure 9, both structural joints (1) shown in Figure 10 are mounted in the preferred orientation such that the "X" direction of each of the structural joints (1) (see the X, Y, Z coordinate axis shown in Figure 10) corresponds to the direction of the frames (24) of the fuselage section (20); the "Y" direction of the structural joint (1) corresponds to the direction in which the beams (25) of the fuselage section (20) or the beam (15) of the removable aircraft panel (10) extend; and the "Z" direction of the structural joint (1) corresponds to the direction substantially towards the centre of the cross-section of the fuselage. The two dashed and dotted lines represent the directions passing through each structural joint (1) substantially towards the centre of the fuselage cross-section.

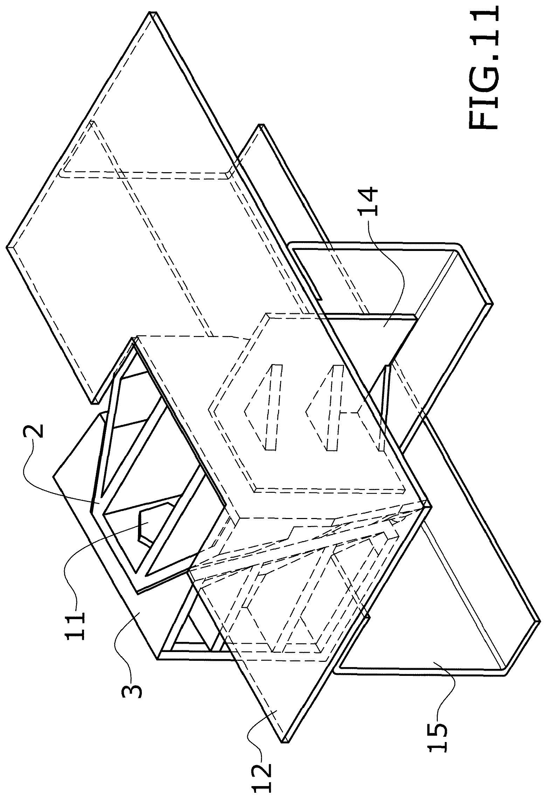

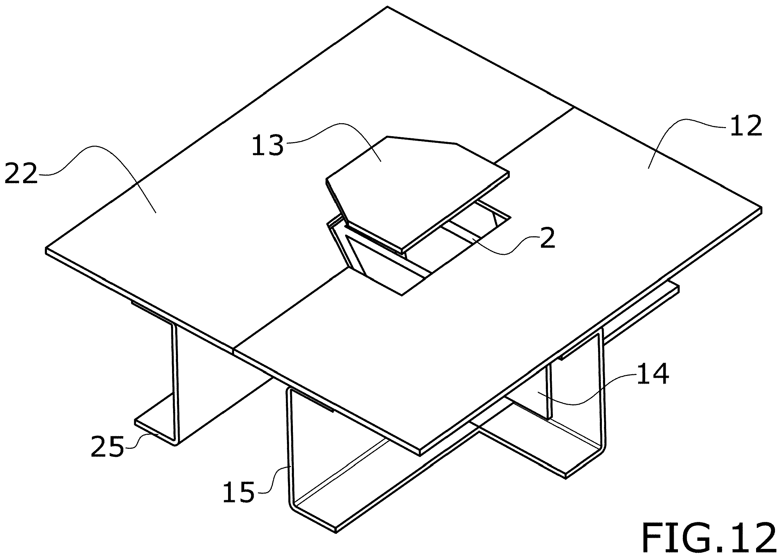

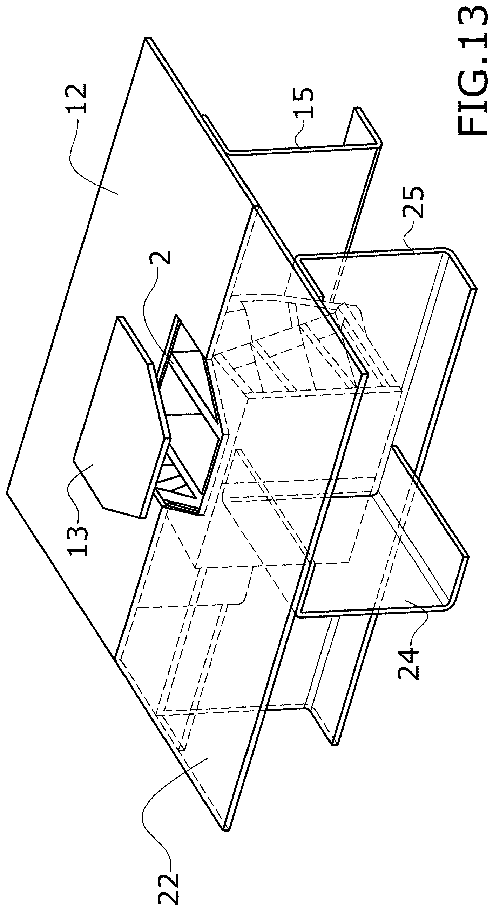

Figures 11 to 13 show different perspective views of the embodiment of the structural joint for releasably assembling a removable aircraft panel to a fuselage section according to the embodiment shown in Figure 8 and also including different portions of the skin and frames of a fuselage section and/or a panel. More particularly, skins (12, 22) and frames (14, 24) of a panel (10) and a fuselage section (20) are shown. As visible in Figure 12, the skins (12, 22) are disposed in line with one end of the structural joint (1) corresponding to the first end (2.7) of the first fitting (2) and the third end (3.7) of the second fitting (3). In this example, the first fitting (2) is fixedly attached to a panel frame (14). As it is shown in Figures 11 to 13, the panel skin (12) and the fuselage skin (22) have a portion configured with the same shape contour as a portion of the first end (2.7) of the body of the first fitting (2). In this example, the panel skin (12) has a recessed portion in the shape of a rectangle, while the fuselage skin (22) has a recessed portion in the shape of a trapezium. As shown in Figures 12 and 13, the structural joint (1) may comprise a cover (13) adapted to close and also provide access to an interior space formed, in this particular example, inside the body of the first fitting (2). In this particular example, the cover (13) is configured as a substantially flat portion having substantially the same shape and size as the first end (2.7) of the first fitting (2). Furthermore, in this particular example, the cover (13) is configured with a shape that is complementary to the free space formed between the panel skin (12) and the fuselage skin (22), so that there is continuity in the entire outer surface formed by the panel skin (12) portion, the fuselage skin (22) portion and the cover (13). Such a cover (13) may be completely removable or openable.

According to a fourth inventive aspect of the invention, a removable aircraft panel (10) is provided, the removable aircraft panel (10) comprising at least one fitting selected from the first fitting (2) or the second fitting (3) according to any of the described embodiments, wherein the at least one fitting (2, 3) is fixedly attached to a panel part. As it is shown in Figures 11 to 13, the removable aircraft panel (10), may further comprise a panel skin (12) and also structural members, such as a frame (14) and a beam (15).

According to a fifth inventive aspect of the invention, a fuselage section (20) for an aircraft (100) is provided, the fuselage section (20) comprising at least one fitting selected from the first fitting (2) or the second fitting (3) according to any of the described embodiments, wherein the at least one fitting (2, 3) is fixedly attached to a part of the fuselage section (20). As it is shown in Figures 11 to 13, the fuselage section (20), may further comprise a fuselage skin (22) and also structural members, such as a frame (24) and a beam (25).

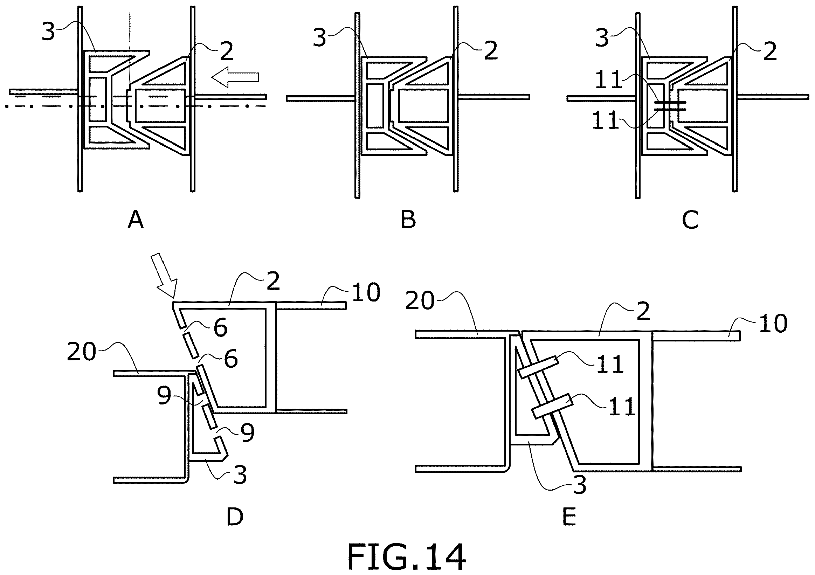

Figure 14 shows different schematic views in cross-section and in longitudinal section of different steps of the assembly process of an embodiment of the structural joint (1) according to the third inventive aspect of the invention. In all figures "A" to "E", the first fitting (2) is the one that is attached to the removable panel (10) so that it corresponds to the movable part of the structural joint (1) in the assembly/disassembly process, while the second fitting (3) is the one that is attached to the fuselage section (20) so that it corresponds to the fixed part of the structural joint (1). Figures "A" to "C" show different moments of a possible situation that can occur during the assembly process of the structural joint (1), when there is an initial misalignment between the first and second fittings (2, 3) with respect to a plane that comprises the centre line of the second main contact portion. Figure "A" shows a moment when the first fitting (2) attached to one member of the removable panel (10) is moved towards the second fitting (3) attached to the fuselage section (20) in the direction of the illustrated arrow and this initial misalignment occurs. The respective planes comprising the respective centre line of the first main contact portion (shown as a dot-and-dash line in this figure "A") of the first fitting (2) and of the second main contact portion of the second fitting (3) (shown as a dashed line in this figure "A") are not aligned. In this misalignment situation, the sliding means (7) of the first fitting (2) and/or of the second fitting (3), if present, help to correctly align the first fitting (1) with the second fitting (3) and also prevent wear of the first contact portion (2.1) surfaces of the first fitting (2) with the contact surfaces (3.1) of the second fitting (3). Also, the shapes of the first fitting (2) and the second fitting (3) advantageously force the correct alignment between the first fitting (2) and the second fitting (3) during the assembly process of the structural joint (1). Figure "B" shows a second moment during the assembly process of the structural joint (1) when the first fitting (2), after being readjusted, is correctly aligned with the second fitting (3). Figure "C" shows a third final moment during the assembly process of the structural joint (1) when, after the first fitting (2) has been readjusted and is correctly aligned with the second fitting (3), the fastening means (11) are introduced or applied between the respective contact portions (2.1, 3.1) of the first and the second fittings (2, 3). Figures "D" and E" show two different moments of another possible situation that can occur during the assembly process of the structural joint (1) when another initial misalignment (different from that of Figure 14A) occurs between the first and second fittings (2, 3). Figure "D" shows a moment when the first fitting (2) attached to the removable panel (10) is moved towards the second fitting (3) attached to the fuselage section (20) in the direction of the illustrated arrow and said initial misalignment occurs. In this other situation, the sliding means (7), if present, in combination with the inclined main contact surfaces (2.1.1, 3.1.1) of the first fitting (2) and the second fitting (3) again help to the correctly align the first fitting (1) with the second fitting (3). Figure "E" shows a final moment during the assembly process of the structural joint (1) when, after the first fitting (2) has been readjusted and correctly aligned with the second fitting (3), the fastening means (11) are introduced or applied between the respective contact portions (2.1, 3.1) of the first and the second fittings (2, 3).

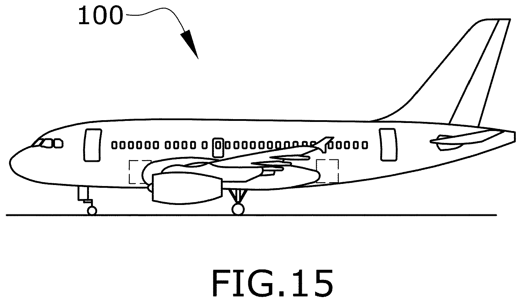

According to a sixth inventive aspect of the invention, an aircraft (100) comprising a removable aircraft panel (10) according to any of the described embodiments and/or a fuselage section (20) according to any of the described embodiments is provided. Figure 15 shows an embodiment of the invention for an aircraft (100) comprising a removable aircraft panel (10) comprising at least one fitting fixedly attached to a part of said panel skin and/or a fuselage section (20) comprising at least one complementary fitting fixedly attached to a part of said fuselage section, wherein the at least one fitting is selected from the first fitting (2) or the second fitting (3) and the at least one complementary fitting is the other fitting.

## Claims

1. A first fitting (2) of a structural joint (1), the first fitting (2) being for attachment to a removable aircraft panel (10) or to a fuselage section (20) for an aircraft (100), the first fitting (2) having a body comprising:
- a first end (2.7),
- a second end (2.8) opposed to the first end (2.7),
- a first supporting portion (2.4) and
- a protruding first contact portion (2.1), both the first supporting portion (2.4) and the first contact portion (2.1) extending between the first end (2.7) and the second end (2.8),
wherein:
- the first supporting portion (2.4) is adapted for being attached to the aircraft panel (10) or to the fuselage section (20);
- the first contact portion (2.1) is adapted to contact a complementary portion of a second fitting (3) of the structural joint (1) in an assembled position with the second fitting (3), wherein the first contact portion (2.1) comprises:
- a first main contact portion (2.1.1), and
- two first lateral contact portions (2.1.2, 2.1.3), each joined to the first main contact portion (2.1.1), wherein the first lateral contact portions (2.1.2, 2.1.3) are arranged laterally with respect to the first main contact portion (2.1.1) and are inclined with respect to the first main contact portion (2.1.1).

2. The first fitting (2) according to claim 1, wherein the first main contact portion (2.1.1) forms an angle with respect to the first supporting portion (2.4), wherein the angle is preferably greater than 0° and less than or equal to 45°, and more preferably comprised in the range of 10° to 30°.

3. The first fitting (2) according to any of the previous claims, wherein the first lateral contact portions (2.1.2, 2.1.3) are symmetrically inclined with respect to the first main contact portion (2.1.1).

4. The first fitting (2) according to any of the previous claims, wherein the first lateral contact portions (2.1.2, 2.1.3) are inclined with respect to the first main contact portion (2.1.1) by an angle greater than 90° and less than or equal to 150°, preferably in the range from 100° to 150°, more preferably in the range from 110° to 130°.

5. The first fitting (2) according to any of the previous claims, wherein the body of the first fitting (2) further comprises at least one web (4.1, 4.2) extending from the first supporting portion (2.4) to the first contact portion (2.1.1), the at least one web (4.1, 4.2) being adapted to transmit axial and bending loads through the first fitting (2).

6. The first fitting (2) according to the previous claim, wherein the at least one web (4.1, 4.2) is configured as a wall that extends in a direction substantially perpendicular to the first supporting portion (2.4) covering substantially the entire region from the first end (2.7) to the second end (2.8).

7. The first fitting (2) according to the previous claim, wherein the body of the first fitting (2) comprises two webs (4.1, 4.2), each of which extends from a respective spaced-apart part of the first supporting portion (2.4) to a respective intersection (2.9, 2.10) of the first main contact portion (2.1) with each of the two first lateral contact portions (2.1.2, 2.1.3) of the first contact portion; and wherein the body of the first fitting (2) further comprises at least two transversal stiffeners (5), each transversal stiffener (5) extending from a corresponding web (4.1, 4.2) in a direction substantially perpendicular to the web (4.1, 4.2), wherein the transversal stiffeners (5) are adapted to transmit shear loads through the first fitting (2).

8. The first fitting (2) according to the previous claim, wherein each transversal stiffener (5) is configured as a wall, and wherein the transversal stiffeners (5) projecting from each web (4.1, 4.2) are distributed at a distance from each other in a direction from the first end (2.7) to the second end (2.8).

9. The first fitting (2) according to any of the previous claims, wherein the first main contact portion (2.1.1) comprises at least one opening (6) for mounting at least one fastening element, preferably a tension bolt (11).

10. The first fitting (2) according to any of the previous claims, wherein the first end (2.7) and/or the second end (2.8) is adapted to allow access from the exterior to an interior space of the body of the first fitting (2).

11. The first fitting (2) according to any of the previous claims, further comprising sliding means (7) arranged in at least one portion selected from the first main contact portion (2.1.1) and the first lateral contact portions (2.1.2, 2.1.3) of the first fitting (2).

12. A second fitting (3) of a structural joint (1), the second fitting (3) being for attachment to a removable aircraft panel (10) or to a fuselage section (20) for an aircraft (100), the second fitting (3) having a body comprising:
- a third end (3.7),
- a fourth end (3.8) opposed to the third end (3.7),
- a second supporting portion (3.4) and
- a recessed second contact portion (3.1), both the second supporting portion (3.4) and the second contact portion (3.1) extending between the third end (3.7) and the fourth end (3.8),
wherein:
- the second supporting portion (3.4) is adapted for being attached to the removable aircraft panel (10) or to the fuselage section (20); and
- the second contact portion (3.1) is adapted to contact the first contact portion (3.1) of the first fitting (2) according to any of claims 1 to 12 in an assembled position with the first fitting (2), wherein the second contact portion (3.1) comprises:
- a second main contact portion (3.1.1), and
- two second lateral contact portions (3.1.2, 3.1.3), each joined to the second main contact portion (3.1.1), wherein the second lateral contact portions (3.1.2, 3.1.3) are arranged laterally with respect to the second main contact portion (3.1.1) and are inclined with respect to the second main contact portion (3.1.1),
wherein the second main contact portion (3.1.1) and the two second lateral contact portions (3.1.2, 3.1.3) have a substantially complementary shape and a substantially same inclination as the respective first main contact portion (2.1.1) and the first lateral contact portions (2.1.2, 2.1.3) of the first fitting (1).

13. The second fitting (3) according to claim 12, wherein the second main contact portion (3.1.1) forms an angle with respect to the second supporting portion (3.4), the angle is preferably greater than 0° and less than or equal to 45°, and more preferably comprised in the range of 10° to 30°.

14. The second fitting (3) according to claim 12 or 13, wherein the second lateral contact portions (3.1.2, 3.1.3) are symmetrically inclined with respect to the second main contact portion (3.1.1).

15. The second fitting (3) according to any of claims 12 to 14, wherein the second lateral contact portions (3.1.2, 3.1.3) are inclined with respect to the second main contact portion (3.1.1) by an angle greater than 90° and less than or equal to 150°, preferably 100° to 150°.

16. The second fitting (3) according to any of claims 12 to 15, wherein the body of the second fitting (3) further comprises at least one transversal stiffener (8) extending from the second supporting portion (3.4) to the second lateral contact portions (3.1.2, 3.1.3) in a direction substantially perpendicular to the second supporting portion (3.4), wherein the at least one transversal stiffener (8) is adapted to transmit shear loads through the second fitting (3).

17. A structural joint (1) for releasably assembling a removable aircraft panel (10) to a fuselage section (20), the structural joint (1) comprising:
- a first fitting (2) according to any of claims 1 to 11, and
- a second fitting (3) according to any of claims 12 to 16.

18. The structural joint (1) according to the previous claim, further comprising fastening means (11) adapted to attach, in the assembled position, the first main contact portion (2.1.1) of the first fitting (2) to the second main contact portion (3.1.1) of the second fitting (3).

19. The structural joint (1) according to the previous claim, wherein the fastening means comprise at least one fastening element, preferably at least one tension bolt (11), and wherein the first main contact portion (2.1.1) of the first fitting (2) and the second main contact portion (3.1.1) of the second fitting (3) comprise a respective corresponding opening (6, 9) for the passage of the at least one fastening element (11).

20. The structural joint (1) according to any of claims 17 to 19, further comprising a cover (13) adapted to close and also provide access to an interior space formed inside the body of the first fitting (2) and/or the body of the second fitting (3).

21. A removable aircraft panel (10), the aircraft panel (10) comprising at least one fitting selected from the first fitting (2) according to any of claims 1 to 11 or the second fitting (3) according to any of claims 12 to 16, wherein the at least one fitting (2, 3) is fixedly attached to a panel part.

22. A fuselage section (20) for an aircraft (100), the fuselage section (20) comprising at least one fitting selected from the first fitting (2) according to any of claims 1 to 11 or the second fitting (3) according to any of claims 12 to 16, wherein the at least one fitting (2, 3) is fixedly attached to a part of the fuselage section (20).

23. An aircraft (100) comprising a removable aircraft panel (10) according to claim 21 and/or a fuselage section (20) according to claim 22.
